# EUROPÄISCHE PATENTSCHRIFT

(11) **EP 2 157 058 B1**
(45) Veröffentlichungstag und Bekanntmachung des Hinweises auf die Patenterteilung: **10.04.2019**
(21) Anmeldenummer: 09167186.7
(22) Anmeldetag: 04.08.2009
(51) Int. Cl.: C02F 5/08, C11D 3/00, C11D 3/06, C11D 3/08, C11D 3/36, C11D 3/37, C11D 7/14, C11D 7/36, C23F 11/08

(54) **Pflegemittel, insbesondere für Heißwasserhochdruckreiniger**
Cleaner, in particular for warm water high pressure cleaners
Produit d'entretien, notamment pour un nettoyeur haute pression à eau chaude

(30) Priorität: 12.08.2008 DE 102008039411
(43) Veröffentlichungstag der Anmeldung: 24.02.2010
(73) Patentinhaber: Alfred Kärcher SE & Co. KG, 71364 Winnenden (DE)
(72) Erfinder: Holzwarth, Wolfgang, 73635, Rudersberg (DE); Klein, Walter, 71364, Winnenden-Bürg (DE); Weitzdörfer, Jürgen, 71397, Weiler zum Stein (DE); Ritscher, Frank, 71384, Weinstadt (DE)
(74) Vertreter: Hoeger, Stellrecht & Partner Patentanwälte mbB

(56) Entgegenhaltungen:
- EP-A- 0 102 587
- EP-A- 0 265 723
- EP-A- 0 510 989
- EP-A1- 2 090 645
- GB-A- 1 208 827
- US-A- 5 427 707
- US-B1- 6 228 824
- US-B1- 6 539 954

## Beschreibung

Die Erfindung betrifft ein Pflegemittel, insbesondere für Heißwasserhochdruckreiniger, die empfohlen werden, dem dem Hochdruckreiniger zugeführten Wasser zuzudosieren, um Kalkablagerungen beim Heißwasserbetrieb zu verhindern.

Solche Produkte sind vielfältig und erfolgreich im Einsatz, beispielsweise in Form des Pflegemittels Systempflege Advance 1 RM 110 ASF der Firma Kärcher.

Solche Pflegemittel werden üblicherweise als Konzentrate vermarktet, die dem dem Heißwasserhochdruckreiniger zugeführten Wasser in geringen Mengen zudosiert werden. Typische Wirkstoffe bei solchen Pflegemitteln sind so genannte Kalkbinder oder auch Trashholder genannt, z.B. organische Phosphonsäureverbindungen, denen Natronlauge zugegeben wird, um den pH-Wert des Konzentrats auf ungefähr neutral einzustellen.

Weitere typische Komponenten des Pflegemittels sind Konservierungsstoffe sowie weitere Additive, beispielsweise Farbstoffe. Der Rest des Pflegemittels ist Wasser.

Neben einer Vermeidung der Verkalkung der wasserführenden Teile in dem Heißwasserhochdruckreiniger wird, solange Wasser der Härte ca. 10 °dH oder größer verwendet wird, ein guter Korrosionsschutz erzielt, der insbesondere daher rührt, dass sich auf der Ummantelung der Heizschlangen, die typischerweise aus Stahl gefertigt werden, eine dünne Kalkschicht als Korrosionsschutzschicht abscheidet.

Problematisch ist der Einsatz der genannten Pflegemittel dann, wenn das zu verarbeitende Wasser eine sehr geringe Härte (weiches Wasser) aufweist, bei der dann die Ausbildung der dünnen Kalkschicht als Schutzschicht auf der Ummantelung der Heizschlangen ungenügend ist oder praktisch ganz unterbleibt und diese korrodieren.

Weiches Wasser, das in den Geräten auch nur relativ kurze Zeit verbleibt, färbt sich aufgrund von Korrosionsprodukten schwarz, so dass hier von Schwarzwasser gesprochen wird.

Aus der US 6,539,954 B1 ist ein flüssiges bis pastenförmiges Mittel für Geschirrspüler bekannt, welches neben herkömmlichen Detergentien ein kristallines Schichtsilikat umfasst.

Die EP 2 090 645 A1 betrifft Mittel zur Reinigung von Oberflächen, welche als Hauptbestandteil ein binäres System in Form eines oberflächenaktiven Agens und ein Nebenbestandteil aus einem Zuckerphosphonat umfassen.

Aufgabe der vorliegenden Erfindung ist es, ein Pflegemittel anzugeben, welches insbesondere Heißwasserhochdruckreinigern zudosiert werden kann und sich sowohl für Wasser mit hohen als auch sehr geringen Wasserhärten eignet und im letzteren Fall das Problem der Bildung von Schwarzwasser vermeidet.

Diese Aufgabe wird erfindungsgemäß durch ein Pflegemittel des Anspruchs 1 gelöst.

Überraschenderweise wird dies durch einen Zusatz eines Alkalisilikats sowie eines Alkaliphosphats zu der Kalkbinder-Komponente (Trashholder) in Form von organischen Phosphonsäureverbindungen sowie Polyacrylsäuren und Copolymeren von Maleinsäure und Acrylsäure sowie deren Derivate erzielt.

Die Alkalität des Alkalisilikats reicht aus, um die zunächst sauer reagierenden Phosphonsäureverbindungen sowie auch die Polyacrylsäure und Copolymere von Maleinsäure und Acrylsäure auf einen neutralen pH-Wert zu bringen.

Während bei den herkömmlichen Pflegemitteln weiches Wasser, beispielsweise in Kontakt mit niedrig legierten Stählen vom Typ ST37.8, in relativ kurzer Zeit, z.B. innerhalb einer Stunde bei Raumtemperatur, bereits eine Schwarzfärbung zeigt, sind die erfindungsgemäßen Pflegemittel bei selbst extrem weichem Wasser in der Lage, die Bildung von Schwarzwasser auch während einer Woche des Kontakts bei Raumtemperatur des mit dem Pflegemittel versetzten Wassers zu vermeiden.

Die Polyacrylsäure und deren Derivate sowie Copolymere von Maleinsäure und Acrylsäure sowie deren Derivate können insbesondere dann Verwendung finden, wenn das Pflegemittel einen niederen Phosphorgehalt aufweisen soll, während in anderen Fällen, in denen dies ohne größere Bedeutung ist, die Verwendung von organischen Phosphonsäureverbindungen bevorzugt ist.

Zunächst wäre denkbar, das Problem des Schwarzwassers mit der Auswahl einer anderen Stahlsorte, insbesondere Edelstahl, bei der Umhüllung der Heizelemente zu lösen, wie dies bei Geschirrspülmaschinen der Fall ist.

Allerdings sind hierbei zwei Probleme zu bedenken. Einmal sind die Kosten von Edelstahlheizschlangen erheblich höher als die aus normalen Stählen gefertigten, beispielsweise den niedrig legierten Stählen vom Typ ST37.8. Darüber hinaus, und dies ist insbesondere bei Heißwasserhochdruckreinigern von erheblicher Bedeutung, ist der Wärmeübergang bei niedrig legierten Stählen des vorgenannten Typs erheblich besser als bei Edelstählen, so dass letztendlich vorzugsweise trotz der Schwarzwasserproblematik auf niedrig legierte Stähle des vorgenannten Typs zurückgegriffen wird.

Im Gegensatz zu Geschirrspülmaschinen, bei denen das Wasser für den Spülvorgang in der Maschine verbleibt, wird bei dem Heißwasserhochdruckreiniger das Wasser im Durchlauf erhitzt und hat nur eine sehr geringe Verweildauer in dem Gerät. Zur Erzielung ausreichend hoher Wassertemperaturen ist deshalb eine effiziente Übertragung der Wärmeleistung der Heizschlangen auf das durchlaufende Wasser von großer Bedeutung.

Vorzugsweise ist bei dem erfindungsgemäßen Pflegemittel der pH-Wert auf einen Wert von ca. 7 oder mehr eingestellt, was verhindert, dass sich ein einmal gebildeter Kalkschutzbelag auf dem Stahl der Heizschlangen-Ummantelung wieder auflösen kann.

Ein bevorzugter Anteil des Alkalisilikats in dem Pflegemittel beträgt ca. 5 bis 15 Gew.-%, wobei die Gewichtsangaben auf die Reinsubstanz des Alkalisilikats bezogen sind. Häufig wird dieses jedoch bei der Herstellung der Pflegemittel als Lösung, beispielsweise als 45%ige Lösung, verarbeitet.

Weiter bevorzugt sind Anteile des Alkalisilikats im Bereich von 7 bis 15 Gew.-%.

Die Alkalisilikate werden bevorzugt in Form der Natrium- und/oder Kaliumalkalisilikate eingesetzt.

Sowohl für die organischen Phosphonsäureverbindungen als auch die Polyacrylsäure und deren Derivate bzw. Copolymere von Malein- und Acrylsäure und deren Derivate sind Bereiche von 4 bis 15 Gew.-% als Anteile am Pflegemittel bevorzugt.

Weiter bevorzugt sind deren Anteile im Bereich von 8 bis 15 Gew.-%.

Bei bevorzugten Pflegemitteln umfasst das Alkaliphosphat ein Polyphosphat.

Der Anteil des Alkaliphosphats beträgt bevorzugt ca. 4 bis 15 Gew.-%.

Weiter bevorzugt liegt der Anteil des Alkaliphosphats in dem Pflegemittel bei ca. 8 bis 15 Gew.-%.

Bei bevorzugten Pflegemitteln umfasst das Alkaliphosphat ein Natrium- und/oder Kaliumphosphat.

Die organische Phosphonsäureverbindung wird vorzugsweise ausgewählt aus Hydroxyethylamino-di(methylenphosphonsäure), die unter der Bezeichnung Hempa von der Firma Connect Chemicals GmbH angeboten wird, 1-Hydroxyethyl-(1,1-diphosphonsäure), Aminophosphonsäuren, z.B. Aminotrismethylenphosphonsäure, und Diethylentriamin-penta(methylenphosphonsäure) oder Mischungen dieser Phosphonsäuren.

Als weitere Komponenten können auch geringe Mengen an Mineralsäuren in dem Pflegemittel enthalten sein, beispielsweise Salzsäure oder Phosphonsäure.

Geeignete Polyacrylverbindungen sind unter der Bezeichnung Socalan CP10S von der BASF AG erhältlich.

Geeignete Copolymere von Maleinsäure und Acrylsäure sind unter dem Namen Socalan CP12S von der BASF AG erhältlich.

Sowohl die Polyacrylverbindungen als auch die Copolymeren von Maleinsäure und Acrylsäure neigen etwas zur Niederschlagsbildung, weshalb sie nicht für alle Applikationen gleich gut geeignet sind. Eine Tendenz zur Schaumbildung schränkt die Verwendung für einige Applikationen ebenfalls ein.

Dem erfindungsgemäßen Pflegemittel kann selbstverständlich eine ganze Reihe von weiteren Additiven zugesetzt werden, die dem Pflegemittel weitere Eigenschaften verleihen oder die bereits genannten weiter verbessern.

Insbesondere vorteilhaft ist, wenn dem Pflegemittel ein Anteil eines Schmiermittelöls sowie eine Tensidkomponente zum Emulgieren dieses Schmiermittelöls beigegeben wird, da dann das Pflegemittel gleichzeitig noch die Aufgabe erfüllen kann, die in Heißwasserhochdruckreinigern vorhandenen Pumpensysteme sowie die in der Wasserführung vorhandenen Gummiteile zu pflegen und zu schützen.

Geeignete Schmiermittelöle können ausgewählt werden aus Paraffinölen, Silikonölen, Mineralölen und nativen Ölen.

Die Tensidkomponente wird vorzugsweise ein oder mehrere schaumarme Tenside umfassen, um ein zu starkes Aufschäumen des über den Hochdruckreiniger ausgebrachten Wassers zu vermeiden.

Der Anteil des Schmiermittelöls in dem Pflegemittel beträgt vorzugsweise ca. 0,05 bis 1 Gew.-%.

In Abhängigkeit des Anteils des Schmiermittelöls sind Tenside erforderlich, um das Schmiermittelöl zu emulgieren. Vorzugsweise werden die Anteile an Schmiermittel zu den Anteilen an Tensidkomponente in dem Pflegemittel im Bereich von ca. 1:8 bis 1:12 liegen.

Um das Pflegemittel mit sehr hohen Konzentrationen seiner Komponenten herstellen zu können, wird vorzugsweise dem Pflegemittel ein Lösungsvermittler beigegeben.

Geeignete Lösungsvermittler sind beispielsweise aromatische Sulfonate, insbesondere Cumolsulfonat, Xylolsulfonat und/oder Toluolsulfonat.

Die Anteile, in denen der Lösungsvermittler in dem Pflegemittel vorzugsweise vorhanden sein sollte, liegt im Bereich von ca. 0,5 bis 6 Gew.-%.

Weiter bevorzugte Anteile des Lösungsvermittlers in dem Pflegemittel liegen bei ca. 1 bis 4 Gew.-%.

Weiter bevorzugte Anteile des Lösungsvermittlers in dem Pflegemittel liegen im Bereich von ca. 2 bis 4 Gew.-%.

Die Erfindung betrifft ferner die Verwendung des zuvor beschriebenen erfindungsgemäßen Pflegemittels als Additiv für das Wasser eines Heißwasserhochdruckreinigers.

Das Pflegemittel wird dem Wasser des Hochdruckreinigers vorzugsweise als Verkalkungsschutz zugegeben und insbesondere im laufenden Betrieb des Hochdruckreinigers dem zugeführten Wasser zudosiert.

Eine weitere Verwendung sieht vor, dass das Pflegemittel dem Wasser des Hochdruckreinigers als Korrosionsschutz zugegeben wird und insbesondere im laufenden Betrieb des Hochdruckreinigers zudosiert wird.

Eine weitere Verwendung des erfindungsgemäßen Pflegemittels liegt darin, dieses als Additiv in Heißwasserkreisläufen, insbesondere von Heizungsanlagen, auch industriellen Heizungsanlagen, zu verwenden. Daneben findet es Anwendung in Kühlkreisläufen, in denen das Wasser partiell ebenfalls auf hohe Temperaturen erhitzt werden kann.

Eine bevorzugte Dosierung des Pflegemittels in den vorgenannten Verwendungen liegt bei ca. 3 ml oder mehr pro °dH und m³ des verwendeten Wassers. Weiter bevorzugt liegt die Dosierung im Bereich von ca. 5 bis 8 ml pro °dH und m³ des verwendeten Wassers.

Den erfindungsgemäßen Pflegemitteln können selbstverständlich typische Konservierungsstoffe, Farbstoffe und dergleichen als weitere Additive zugefügt sein.

Diese und weitere Vorteile der Erfindung werden im Folgenden anhand der Beispiele noch näher erläutert.

### Vergleichsbeispiel 1

4,2 Gew.-% Hempa (60%ig)
4,5 Gew.-% Natronlauge (50%ig)
0,1 Gew.-% biocides Konservierungsmittel (z.B. Acticide FS der Firma Thor)
Rest demineralisiertes Wasser; pH-Wert = 7

Dieses Pflegemittel eignet sich zum Zudosieren zu Wasser, das mittels eines Heißwasserhochdruckreinigers ausgebracht werden soll. Als Dosierung werden ca. 6 ml pro °dH und m³ Wasser empfohlen.

Bei Wasserqualitäten mit Härtegraden von ca. 10°dH oder mehr treten bei diesem Pflegemittel keine Schwarzwasserprobleme auf. D.h. in Tests, bei denen eine Heizschlangen-Ummantelung aus niedrig legiertem Stahl vom Typ ST37.8 während 48 h bei Raumtemperatur in Kontakt mit dem Pflegemittel in oben genannter Dosierung versetztem Wasser gehalten wird, wird keine Schwarzwasserbildung beobachtet.

Führt man den Test unter sonst gleichen Bedingungen mit Wasser der Härte con ca. 5°dH oder weniger durch, tritt die Schwarzwasserbildung schon nach 1 h bei Raumtemperatur auf.

### Beispiel 2

10,0 Gew.-% Hempa (60%ig)
11,0 Gew.-% Na-Tripolyphosphat
26,0 Gew.-% Kaliumsilikat (45%ig)
0,15 Gew.-% biocides Konservierungsmittel (Acticide FS der Firma Thor)
Rest demineralisiertes Wasser; pH-Wert = 12,3

Dieses erfindungsgemäße Pflegemittel ist vergleichbar in seiner Pflegewirkung, d.h. Verkalkungsschutz, mit dem Pflegemittel des Vergleichsbeispiels 1.

Allerdings zeigen Schwarzwasser-Tests die Vermeidung von Schwarzwasser mit weichem Wasser der Härte von ca. 5°dH oder weniger in Kontakt mit Stahltyp ST37.8 während 48 h bei Raumtemperatur.

### Vergleichsbeispiel 3

3,9 Gew.-% Hempa (60%ig)
2,2 Gew.-% Natronlauge (50%ig)
0,1 Gew.-% biocides Konservierungsmittel
4,0 Gew.-% Na-Cumolsulfonat (40%ig)
Rest demineralisiertes Wasser; pH-Wert = 7

Diese Rezeptur zeigt einen Schwarzwasser-Effekt wie Vergleichsbeispiel 1.

### Vergleichsbeispiel 4

Der Rezeptur von Vergleichsbeispiel 3 werden noch
0,6 Gew.-% Tallölfettsäure (z.B. Spezial-Olein der Firma Gustav Heess)
1,0 Gew.-% Emulgator für die Tallölfettsäure (z.B. Emulan HE50 der BASF AG) pH-Wert = 7
zugegeben, wobei die Tallölfettsäure als Pumpenschmiermittel wirkt.

Gegenüber den Rezepturen der Vergleichsbeispiele 1 und 3 tritt keine Verbesserung bezüglich der Schwarzwasserbildung ein. Die Rezeptur erweist sich insgesamt als zu stark schäumend.

### Beispiel 5

8,0 Gew.-% Hempa (60%ig)
9,0 Gew.-% Natriumtripolyphosphat
25,0 Gew.-% Kaliumsilikat (45%ig)
6,0 Gew.-% Natriumcumolsulfonat (40%ig)
0,2 Gew.-% Paraffinöl, dickflüssig (z.B. Merck, Artikelnr. 107160)
1,8 Gew.-% Emulgator (z.B. Plurafac LF403 der BASF AG)
pH-Wert = 12

Diese Rezeptur liefert dieselben exzellenten Schwarzwassertestergebnisse wie die Rezeptur von Beispiel 2, bietet aber zusätzlich noch die Funktion der Pumpenschmierung sowie der Pflege der Gummiteile der Apparatur des Heißwasserhochdruckreinigers. Die Schaumbildung bleibt innerhalb eines akzeptablen Bereichs.

Bei der Herstellung der vorgenannten Rezepte werden in der Regel die Anteile an demineralisiertem Wasser vorgegeben, in diese der Kalkbinder (z.B. Hempa) eingerührt. Eventuell sich bildende Klumpen lösen sich mit Zugabe des Lösungsvermittlers (Na-Cumolsulfonat). Die anderen Komponenten können dann in beliebiger Reihenfolge zugegeben werden.

Das in den Rezepturen verwendete Wasser sollte demineralisiertes Wasser oder destilliertes Wasser sein. Die Verwendung von lediglich enthärtetem Wasser hat den Nachteil, dass die Salzfracht rezepturseitig zu hoch werden kann, mit der Folge, dass das Pflegemittel trüb erscheint oder bei längerer Lagerung eine Trübung zeigt. Dem müsste mit höheren Konzentrationen von Lösungsvermittlern entgegengewirkt werden. Höhere Anteile von Lösungsvermittlern verursachen in der Regel höhere Kosten als die Verwendung von demineralisiertem Wasser.

## Patentansprüche

1. Pflegemittel, insbesondere für Heißwasserhochdruckreiniger, wobei das Pflegemittel umfasst:
2,5 bis 20 Gew.-% eines Alkalisilikats,
2 bis 20 Gew.-% einer Kalkbinder-Komponente in Form von organischen Phosphonsäureverbindungen, gegebenenfalls gemischt mit einer weiteren Komponente, ausgewählt aus Polyacrylsäuren und deren Derivaten und/oder Copolymere von Maleinsäure und Acrylsäure und deren Derivaten,
2 bis 20 Gew.-% eines Alkaliphosphats
sowie demineralisiertes Wasser.

2. Pflegemittel nach Anspruch 1, **dadurch gekennzeichnet, dass** der pH-Wert des Pflegemittels 7 oder mehr beträgt.

3. Pflegemittel nach Anspruch 1 oder 2, **dadurch gekennzeichnet, dass** der Anteil des Alkalisilikats 5 bis 15 Gew.-%, weiter bevorzugt 7 bis 15 Gew.-% beträgt.

4. Pflegemittel nach einem der Ansprüche 1 bis 3, **dadurch gekennzeichnet, dass** die organische Phosphonsäureverbindung ausgewählt ist aus Hydroxyethylamino-di(methylenphosphonsäure), Hexaethyl-(1,1 diphosphonsäure), Aminophosphonsäuren und Diethylentriaminpenta(methylenphosphonsäure) oder Mischungen dieser Phosphonsäuren.

5. Pflegemittel nach einem der Ansprüche 1 bis 4, **dadurch gekennzeichnet, dass** der Anteil der Kalkbinder-Komponente 4 bis 15 Gew.-%, weiter bevorzugt 8 bis 15 Gew.-% beträgt.

6. Pflegemittel nach einem der Ansprüche 1 bis 5, **dadurch gekennzeichnet, dass** der Anteil des Alkaliphosphats 4 bis 15 Gew.-%, weiter bevorzugt 8 bis 15 Gew.-% beträgt.

7. Pflegemittel nach einem der Ansprüche 1 bis 6, **dadurch gekennzeichnet, dass** das Pflegemittel einen Anteil eines Schmiermittelöls sowie eine Tensidkomponente zum Emulgieren des Schmiermittelöls umfasst, bevorzugt ausgewählt aus Paraffinölen, Silikonölen, Mineralölen und nativen Ölen, wobei der Anteil des Schmiermittelöls in dem Pflegemittel vorzugsweise 0,05 bis 1 Gew.-% beträgt, und wobei weiter bevorzugt die Tensidkomponente ein oder mehrere schaumarme Tenside umfasst.

8. Pflegemittel nach Anspruch 7, **dadurch gekennzeichnet, dass** das Verhältnis der Anteile an Schmiermittel zu den Anteilen an Tensidkomponente in dem Pflegemittel im Bereich von 1:8 bis 1:12 liegt.

9. Pflegemittel nach einem der Ansprüche 1 bis 8, **dadurch gekennzeichnet, dass** es einen Lösungsvermittler umfasst.

10. Pflegemittel nach Anspruch 9, **dadurch gekennzeichnet, dass** der Lösungsvermittler ein Cumolsulfonat, ein Xylolsulfonat und /oder ein Toluolsulfonat umfasst.

11. Pflegemittel nach Anspruch 10, **dadurch gekennzeichnet, dass** der Anteil des Lösungsvermittler 0,5 bis 6 Gew.-%, weiter bevorzugt 1 bis 4 Gew.-%, insbesondere 2 bis 4 Gew.-% beträgt.

12. Verwendung des Pflegemittels nach einem der Ansprüche 1 bis 11 als Additiv für das Heißwasser eines Heißwasserhochdruckreinigers, wobei bevorzugt das Pflegemittel dem Wasser des Hochdruckreinigers als Verkalkungsschutz zugegeben, insbesondere im laufenden Betrieb des Hochdruckreinigers zudosiert wird.

13. Verwendung nach Anspruch 12, **dadurch gekennzeichnet, dass** das Pflegemittel dem Wasser des Hochdruckreinigers als Korrosionsschutz zugegeben, insbesondere im laufenden Betrieb des Hochdruckreinigers zudosiert wird.

14. Verwendung des Pflegemittels nach einem der Ansprüche 1 bis 11 als Additiv in Heißwasserkreisläufen, insbesondere von Heizungsanlagen oder Kühlanlagen.

15. Verwendung nach einem der Ansprüche 12 bis 14, **dadurch gekennzeichnet, dass** das Pflegemittel in einer Dosierung von 3 ml oder mehr pro °dH und m³ Wasser verwendet wird.

## Claims

1. Care composition, in particular for hot water high pressure cleaners, wherein the care composition comprises:
2.5 to 20 % by weight of an alkali silicate,
2 to 20 % by weight of a chalk binding component in the form of organic phosphonic acid compounds, optionally mixed with a further component selected from polyacrylic acids and derivatives thereof and/or copolymers of maleic acid and acrylic acid and derivatives thereof,
2 to 20 % by weight of an alkali phosphate,
and demineralised water.

2. Care composition in accordance with claim 1, **characterized in that** the pH value of the care composition is 7 or higher.

3. Care composition in accordance with claim 1 or 2, **characterized in that** the content of the alkali silicate is 5 to 15 % by weight, further preferably 7 to 15 % by weight.

4. Care composition in accordance with any one of claims 1 to 3, **characterized in that** the organic phosphonic acid compound is selected from hydroxyethylamino-di(methylenephosphonic acid), hexaethyl-(1,1-diphosphonic acid), aminophosphonic acids and diethylenetriaminepenta(methylenephosphonic acid) or mixtures of these phosphonic acids.

5. Care composition in accordance with any one of claims 1 to 4, **characterized in that** the content of the chalk binding component is 4 to 15 % by weight, further preferably 8 to 15 % by weight.

6. Care composition in accordance with any one of claims 1 to 5, **characterized in that** the content of the alkali phosphate is 4 to 15 % by weight, further preferably 8 to 15 % by weight.

7. Care composition in accordance with any one of claims 1 to 6, **characterized in that** the care composition has a content of a lubricating oil and a surfactant component for emulsifying the lubricating oil, preferably selected from paraffin oils, silicone oils, mineral oils and native oils, wherein the content of the lubricating oil in the care composition is preferably 0.05 to 1 % by weight, and more preferably wherein the surfactant component comprises one or more low-foaming surfactants.

8. Care composition in accordance with claim 7, **characterized in that** the ratio of the content of lubricant to the content of surfactant component in the care composition is in the range of 1:8 to 1:12.

9. Care composition in accordance with any one of claims 1 to 8, **characterized in that** it comprises a solubiliser.

10. Care composition in accordance with claim 9, **characterized in that** the solubiliser comprises a cumene sulfonate, a xylene sulfonate and/or a toluene sulfonate.

11. Care composition in accordance with claim 10, **characterized in that** the content of the solubiliser is 0.5 to 6 % by weight, further preferably 1 to 4 % by weight, in particular 2 to 4 % by weight.

12. Use of the care composition in accordance with any one of claims 1 to 11 as an additive for the hot water of a hot water high pressure cleaner, preferably wherein the care composition is added to the water of the high pressure cleaner as a protection against scale deposits and is in particular dosed thereinto when the high pressure cleaner is running.

13. Use in accordance with claim 12, **characterized in that** the care composition is added to the water of the high pressure cleaner as a protection against corrosion and is in particular dosed thereinto when the high pressure cleaner is running.

14. Use of the care composition in accordance with any one of claims 1 to 11 as an additive in hot water circuits, in particular in heating equipment or cooling equipment.

15. Use in accordance with any one of claims 12 to 14, **characterized in that** the care composition is used in a dosage of 3 ml or more per °dH and m³ of water.

## Revendications

1. Produit d'entretien, notamment pour un nettoyeur haute pression à eau chaude, le produit d'entretien comprenant :
2,5 à 20 % en poids d'un silicate alcalin,
2 à 20 % en poids d'un composant liant à la chaux sous forme de composés organiques d'acide phosphonique, le cas échéant mélangé avec un autre composant, choisi parmi les acides polyacrylique et leurs dérivés et/ou les copolymères d'acide maléique et d'acide acrylique et leurs dérivés,
2 à 20 % en poids d'un phosphate alcalin,
ainsi que de l'eau déminéralisée.

2. Produit d'entretien selon la revendication 1, **caractérisé en ce que** le pH du produit d'entretien est de 7 ou plus.

3. Produit d'entretien selon la revendication 1 ou 2, **caractérisé en ce que** la proportion de silicate alcalin est de 5 à 15 % en poids, plus préférentiellement de 7 à 15 % en poids.

4. Produit d'entretien selon l'une des revendications 1 à 3, **caractérisé en ce que** le composé organique d'acide phosphorique est choisi parmi l'acide hydroxyéthylaminodiméthylène phosphonique, l'acide hexaéthyl-1,1-diphosphonique, les acides aminophosphoniques et l'acide diéthylène triamine pentaméthylène phosphonique ou des mélanges de ces acides phosphoniques.

5. Produit d'entretien selon l'une des revendications 1 à 4, **caractérisé en ce que** la proportion du composant liant à la chaux est de 4 à 15 % en poids, plus préférentiellement de 8 à 15 % en poids.

6. Produit d'entretien selon l'une des revendications 1 à 5, **caractérisé en ce que** la proportion du phosphate alcalin est de 4 à 15 % en poids, plus préférentiellement de 8 à 15 % en poids.

7. Produit d'entretien selon l'une des revendications 1 à 6, **caractérisé en ce que** le produit d'entretien comprend une proportion d'huile lubrifiante ainsi qu'un composant tensioactif destiné à émulsifier l'huile lubrifiante, de préférence choisie parmi les huiles paraffiniques, les huiles siliconées, les huiles minérales et les huiles natives, la proportion d'huile lubrifiante dans le produit d'entretien étant de préférence de 0,05 à 1 % en poids, et le composant tensioactif comprenant plus préférentiellement un ou plusieurs tensioactifs faiblement moussants.

8. Produit d'entretien selon la revendication 7, caractérisé en que le rapport des proportions du lubrifiant sur les proportions du composant tensioactif dans le produit d'entretien est compris dans la plage de 1/8 à 1/12.

9. Produit d'entretien selon l'une des revendications 1 à 8, **caractérisé en ce qu'**il comprend un solubilisant.

10. Produit d'entretien selon la revendication 9, **caractérisé en ce que** le solubilisant comprend un cumène sulfonate, un xylène sulfonate et/ou un toluène sulfonate.

11. Produit d'entretien selon la revendication 10, **caractérisé en ce que** la proportion de solubilisant est de 0,5 à 6 % en poids, plus préférentiellement de 1 à 4 % en poids, en particulier de 2 à 4 % en poids.

12. Utilisation du produit d'entretien selon l'une des revendications 1 à 11 en tant qu'additif pour l'eau chaude d'un nettoyeur haute pression à eau chaude, le produit d'entretien étant de préférence ajouté à l'eau du nettoyeur haute pression en tant qu'agent anti-calcaire, en particulier au cours du fonctionnement du nettoyeur haute pression.

13. Utilisation selon la revendication 12, **caractérisée en ce que** le produit d'entretien est ajouté à l'eau du nettoyeur haute pression en tant qu'agent anti-corrosion, en particulier au cours du fonctionnement du nettoyeur haute pression.

14. Utilisation du produit d'entretien selon l'une des revendications 1 à 11 en tant qu'additif dans des circuits d'eau chaude, en particulier des installations de chauffage ou des installations de refroidissement.

15. Utilisation du produit d'entretien selon l'une des revendications 12 à 14, **caractérisée en ce que** le produit d'entretien est utilisé en un dosage de 3 ml ou plus par °dH et m³ d'eau.
